# EUROPÄISCHE PATENTSCHRIFT

(11) **EP 0 402 504 B1**
(45) Veröffentlichungstag und Bekanntmachung des Hinweises auf die Patenterteilung: **16.04.1997**
(21) Anmeldenummer: 89110833.4
(22) Anmeldetag: 14.06.1989
(51) Int. Cl.: G06K 7/06

(54) **Chipkartenkontaktiergerät**
Chip card connecting apparatus
Appareil de connexion pour cartes à puce

(43) Veröffentlichungstag der Anmeldung: 19.12.1990
(73) Patentinhaber: AMPHENOL-TUCHEL ELECTRONICS GmbH, D-74080 Heilbronn (DE)
(72) Erfinder: Schuder, Bernd, 74193 Schwaigern (DE); Reichardt, Manfred, 74189 Weinsberg (DE)
(74) Vertreter: Wagner, Karl H., Dipl.-Ing.

(56) Entgegenhaltungen:
- DE-A- 3 343 727
- DE-A- 3 343 757
- DE-A- 3 602 668

## Beschreibung

Die Erfindung bezieht sich auf einen Chipkartenleser, der auch unter dem Namen Chipkarten-Kontaktiergerät bekannt ist. Solche Chipkartenleser dienen dazu, die auf einer Chipkarte vorgesehenen Kontakte zu kontaktieren, um so ein Auslesen, oder gegebenenfalls auch Eingeben von Information in die Chipkarte zu gestatten. Solche Chipkartenleser werden in verschiedene Geräte, beispielsweise auch Telefongeräte eingebaut, um so dem Benutzer beispielsweise ein a Telefongespräch zu ermöglichen.

Chipkartenleser sind bereits bekannt und es sei in diesem Zusammenhang auf die folgenden deutschen Offenlegungsschriften hingewiesen: DE-OS 29 52 442, DE-OS 33 43 727, DE-OS 33 43 757, DE-OS 34 02 632 und DE-OS 36 02 668, welch Letztere Merkmale der Oberbegriffe der Ansprüche 1 und 6 zeigt.

Bei einem solchen bekannten Chipkartenleser wird ein stationäres Bauteil, wie beispielsweise ein Gehäuse verwendet, in dem ein bewegliches Teil in der Form eines Kontaktträgers hin und her beweglich angeordnet ist. Dabei wird die Chipkarte in den Kartenleser eingesetzt, und beim Hineinschieben der Chipkarte in den Leser wird der Kontaktträger derart verschoben, daß die am Kontaktträger angeordneten Kontakte die entsprechenden Kontakte auf der Chipkarte berühren. Um die Karte aus der eben erwähnten Lesestellung zu entnehmen, zieht man einfach an dem noch aus dem Chipkartenleser herausstehende Ende der Karte, so daß die in der Lesestellung durch eine sogenannte Kartenbremse festgehaltene Karte von der Bremse wieder freigegeben wird und dabei auch die Rückbewegung des Kontaktträgers unterstützt durch auf den Kontaktträger wirkende Federmittel erlaubt. Ein derart arbeitender Chipkartenleser wird auch als nach dem Push-Pull-Prinzip arbeitend bezeichnet.

Chipkartenleser müssen einer Reihe von strengen Anforderungen genügen. Es muß eine einwandfreie Kontaktierung der Chipkarte selbst bei häufigem Gebrauch möglich sein. Ferner muß der Chipkartenleser möglichst klein ausgebildet sein, damit er auch in Anwendungsfällen eingesetzt werden kann, wo nur wenig Platz zur Verfügung steht. Wenn beispielsweise der Chipkartenleser in einem Autotelefon verwendet werden soll, so wird das Problem des Platzbedarfes außerordentlich gravierend, wenn man bedenkt, daß an der Fahrzeugkonsole nur wenig Raum zur Verfügung steht.

Die vorliegende Erfindung bezweckt einen Chipkartenleser vorzusehen, der ausgezeichnete Betriebseigenschaften mit geringem Raumbedarf vereinigt. Insbesondere soll die Bauhöhe des Chipkartenlesers gering sein. Ferner soll aber auch die Breite des Chipkartenlesers nur wenig über die Breite der Chipkarte hinausgehen. Zweckmäßiger Weise soll auch die Bautiefe des Chipkartenlesers gering sein. Die Erfindung bezweckt ferner, einen Chipkartenleser derart auszubilden, daß geringe Herstellungskosten entstehen, zum einen bei der Herstellung der Teile und zum anderen auch bei deren Montage.

Zur Lösung dieser Aufgabe sieht die Erfindung bei einem Kartenkontaktiergerät gemäß dem Oberbegriff des Anspruchs 1 bzw. 6 vor, daß die Merkmale des kennzeichnenden Teils des Anspruchs 1 bzw 6 vorgesehen sind.

Bervorzugte Ausgestaltungen der Erfindung ergeben sich aus den übrigen Ansprüchen.

Vorzugsweise wird durch die formschlüssige Führung eine Absenkung des Kontaktträgers zusammen mit den Kontaktelementen zur Chipkarte hin bewirkt, wobei ferner zur Verkürzung des Kontaktweges und damit der Bauhöhe die Kontaktelemente des Kontaktträgers vorgespannt sind. Diese Vorspannung der Kontakte (Kontaktelemente) wird, insbesondere beim Einpritzen der Kontakte in einen einstückigen Kontaktträger erreicht. Der aus einzelnen Kontaktelementen bestehende Kontaktsatz bildet somit mit dem Kontaktträger ein Stück und ist gleichzeitig mit den benötigten Führungsbahnen ausgestattet. Die Führungsbahnen sind vorzugsweise an Führungselementen des Kontaktträgers ausgebildet. Zusammen mit den übrigen als Blattfederkontakten ausgebildeten Kontaktelementen wird auch ein Endlagenschalter ebenfalls in der Form einfacher Blattfederkontakte in den Kontaktträger mit eingebaut, vorzugsweise eingespritzt. Auch dies fördert die geringe Bauhöhe für den Chipkartenleser und die dem Einschub der Karte durch den Endlagenschalter entgegengesetze Kraft wird außerordentlich gering.

Bevorzugte Ausgestaltungen ergeben sich aus der Beschreibung von Ausführungsbeispielen anhand der Zeichnung; in der Zeichnung zeigt:
- Fig. 1: schematisch einen Chipkartenleser mit Chipkarte sowie ein Gerät, beispielsweise ein Telefongerät in das der Chipkartenleser eingebaut werden soll;
- Fig. 2 bis 6: Schnitte Längslinie 2'-2', 3'-3' bzw. 4'-4' bzw. 5'-5' bzw. 6'-6' in Fig. 7;
- Fig. 7: eine Draufsicht auf einen gemäß der Erfindung ausgebildeten Chipkartenleser;
- Fig. 8 und 9: Schnitte längs Linie 9-9 in Fig. 7, wobei in Fig. 8 die Chipkarte nicht eingesetzt ist, der Chipkartenleser und der Kontaktträger sich sozusagen in seiner Ausgangsstellung befinden, während in Fig. 9 die Chipkarte eingesetzt ist und demzufolge der Chipkartenleser bzw. der Kontaktträger sich in ihrer Lesestellung befinden.
- Fig. 10 und 11: den Fig. 2 und 3 entsprechende Schnitte, die lediglich wegen der vielen Bezugszeichen zur Erhöhung der Übersichtlichkeit vorgesehen wurden.
- Fig. 12: eine Vergrößerung von Fig. 5.
- Fig. 13 und 14: in Schnittdarstellungen ähnlich den linken Teilen der Fig. 3 und 4, wobei hier bevorzugte Ausgestaltungen der Erfindung gezeigt sind.
- Fig. 15-18: ein weiteres bevorzugtes Ausführungsbeispiel der Erfindung, wobei Fig 15 eine Draufsicht ähnlich Fig. 7 ist, Fig. 16 ist ein Schnitt längs Linie 16-16 in Fig. 15, Fig. 17 zeigt eine Einzelheit der Fig. 16, und Fig. 18 eine Einzelheit der Fig. 15.

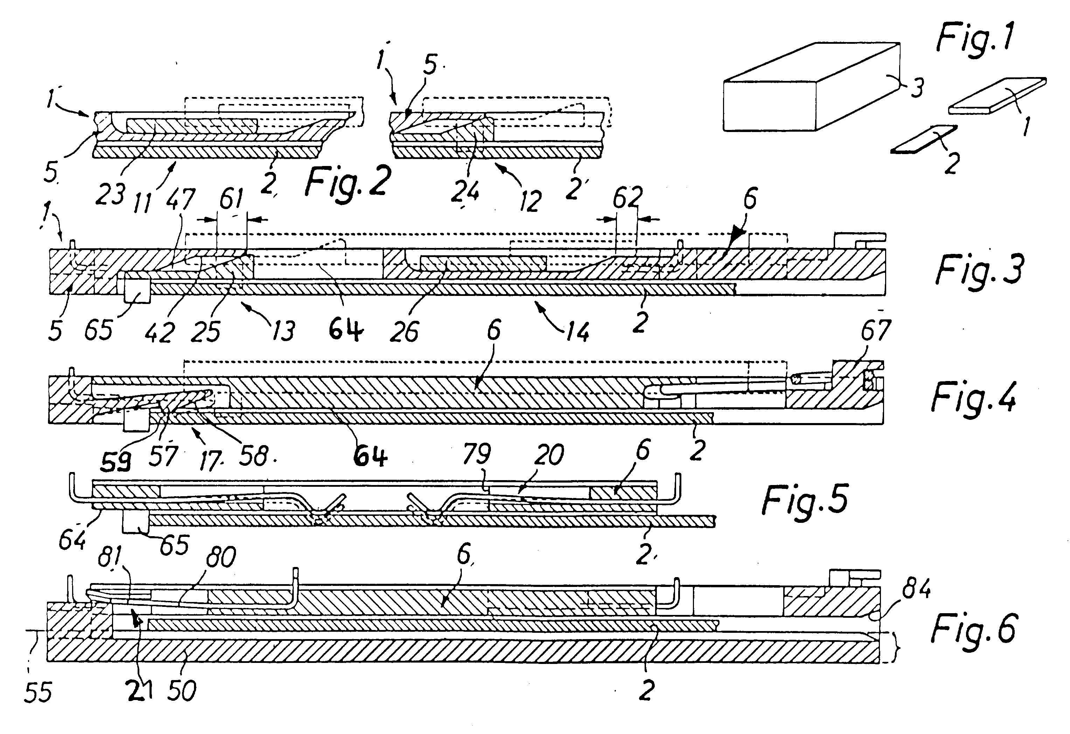

In Fig. 1 ist mit dem Bezugszeichen 3 schematisch irgendein Gerät, beispielsweise ein Telefon bezeichnet, in welches ein Chipkartenleser (Chipkarten-Kontaktiergerät) 1 gemäß der Erfindung eingebaut werden soll. Die Chipkarte 2 dient nach dem Einbau des Chipkartenlesers 1 in das Gerät 3 dazu, das Gerät 3 betriebsbereit zu machen, indem ein Benutzer die Chipkarte 2 in den Chipkartenleser (Chipkarten-Kontaktiergerät) einschiebt.

In den Fig. 2 bis 11 ist der erfindungsgemäße Chipkartenleser 1 im einzelnen dargestellt, wobei durch die gestrichelte nahezu gepunktete Darstellung die Ausgangsstellung für Karte 2 und Chipkartenleser 1 dargestellt ist, während mit ausgezogenen Linien die Lesestellung veranschaulicht ist.

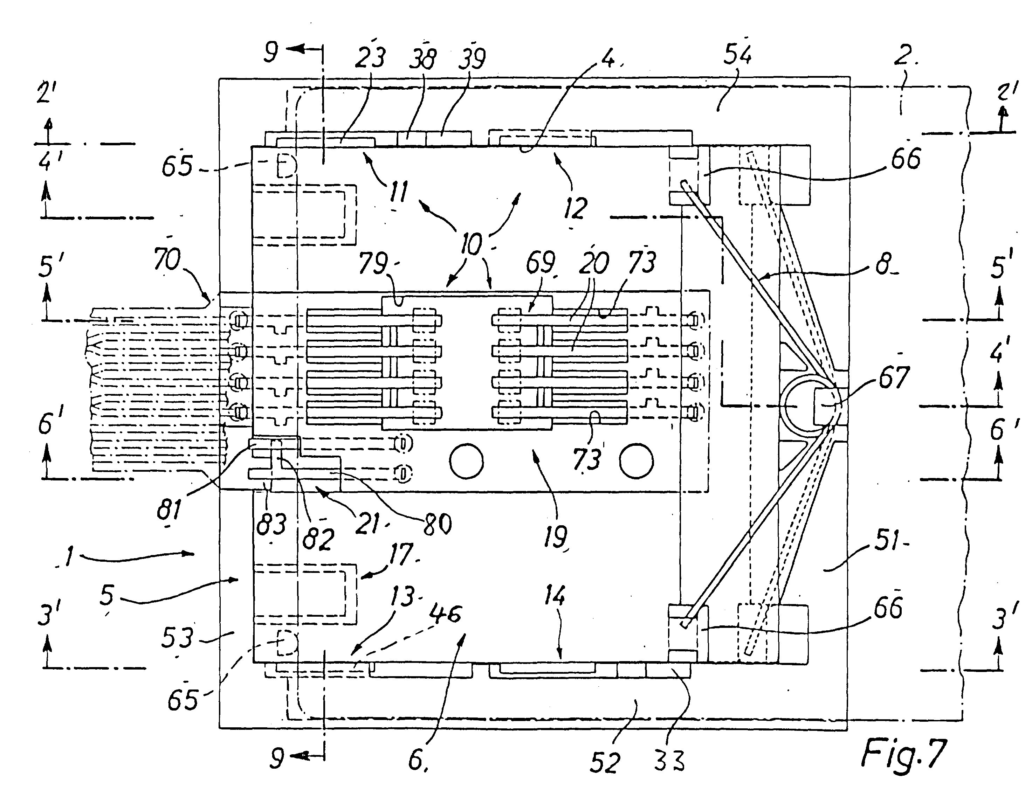

Zunächst sei der Aufbau des erfindungsgemäßen Chipkartenlesers 1, insbesondere unter Bezugnahme auf die Fig. 7, sowie Fig. 2 bis 4 erläutert.

Der Chipkartenleser 1 weist einen stationären, in üblicher Weise am Gerät 3 zu befestigenden, Rahmen 5 auf. In einer nahezu quadratischen Öffnung 4 im Rahmen 5 ist ein bewegliches Teil in der Form eines Kontaktelementträgers 6 hin und her bewegbar gelagert, und zwar zwischen einer Ausgangsstellung (feingestrichelt) und einer Lesestellung (ausgezogene Linien). Der Kontaktelementträger 6 wird durch Federmittel 8 in seine Ausgangsstellung vorgespannt.

Für die Relativbewegung zwischen Kontaktträger 6 und Rahmen 5 sind ganz allgemein Lager- und Führungsmittel 10 vorgesehen, die insbesondere eine Absenkbewegung für den Kontaktträger 6 bewirken, wenn sich dieser aus seiner Ausgangsstellung in seine Lesestellung bewegt.

Die Lager- und Führungsmittel 10 sind im dargestellten Ausführungsbeispiel durch erste bis vierte Führungseinrichtungen 11-14 gebildet, die in der Nähe der vier Ecken des Kontaktträgers 6 und entsprechend auch im Rahmen 5 vorgesehen sind.

Halte- oder Bremsmittel 17 (vgl. dazu Fig. 4 und 7) halten die Chipkarte 2 zusammen mit dem Kontaktträger 6 in der Lesestellung entgegen der Kraft der Federmittel 8.

Am Kontaktträger 6 ist ein Kontaktelementsatz 19, der einzelne Kontaktelemente 20, sowie einen Endlagenschalter 21 umfaßt, entweder befestigt, oder, wie dargestellt, einstückig mit dem Kontaktträger ausgebildet.

Nach dieser kurzen Übersicht sei auf den erfindungsgemäßen Chipkartenleser 1 im einzelnen eingegangen.

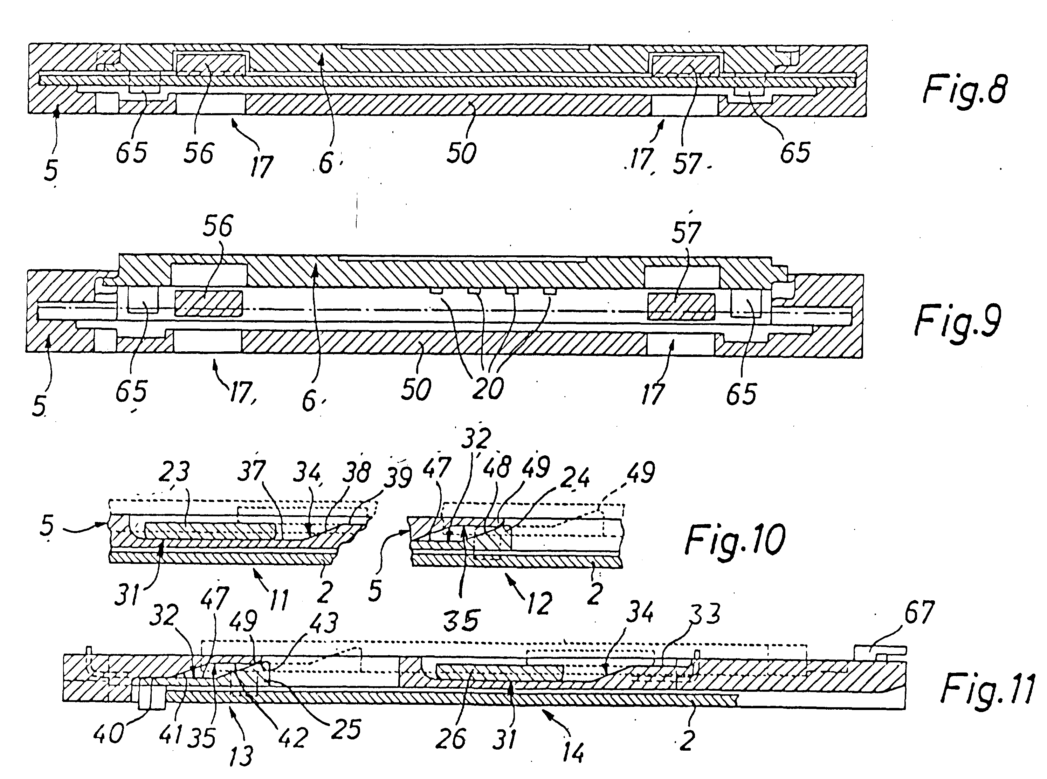

Die ersten bis vierten Führungseinrichtungen 11-14 sind praktisch kreuzweise identisch ausgebildet. So entspricht die erste 11 im wesentlichen der vierten 14 und die zweite 12 im wesentlichen der dritten Führungseinrichtung 13. Jede der ersten bis vierten Führungseinrichtungen 11-14 weist für eine formschlüssige Führung bei der Bewegung des Kontaktträgers 6 von der Ausgangsstellung in die Lesestellung (und umgekehrt) rahmenseitige und kontaktträgerseitige Führungsbahnen 31-35 (vgl. Fig. 10 und 11) auf, was noch zu erläutern ist. Die kontaktträgerseitigen Führungsbahnen 31, 35, 32, 34 sind an ersten bis vierten Führungselementen 23-26 ausgebildet.

Im einzelnen besitzt die erste Führungseinrichtung 11 eine erste ebene Kontaktträgerführungsbahn 31 auf, die, wie erwähnt, vorzugsweise an einem Führungselement 23 ausgebildet ist. Ferner ist eine erste Rahmenführungsbahn 34 am Rahmen zur Zusammenarbeit mit der Kontaktträgerführungsbahn 31 ausgebildet. Die erste Rahmenführungsbahn 34 weist einen ebenen Abschnitt 37, einen Rampenabschnitt 38 und einen höhenmäßig gegenüber dem ersten ebenen Abschnitt 37 versetzten zweiten ebenen Abschnitt 39 auf. In gleicher Weise weist die vierte Führungseinrichtung 14 eine erste Kontaktträgerführungsbahn 31 und eine erste Rahmenführungsbahn 34 auf.

Die zweite Führungseinrichtung 12 (vgl. Fig. 10) weist eine zweite Kontaktträgerführungsbahn 32 und damit zusammenwirkend eine zweite Rahmenführungsbahn 35 auf. In gleicher Weise weist auch die dritte Führungseinrichtung 13 eine zweite Kontaktträgerführungsbahn 32 und eine zweite Rahmenführungsbahn 35 auf. Im einzelnen besitzt die zweite Rahmenführungsbahn 35 einen ersten ebenenen Abschnitt 40, anschließend eine Schrägfläche 41 und daran wiederum anschließend einen zweiten ebenen Abschnitt 42 auf, der an seinem freien Ende eine Anschlagschräge 43 bildet (vgl. dazu Fig. 11). Der zweite Abschnitt 42 liegt höher als der erste Abschnitt 40. Aus Fig. 10 und 11 ergibt sich im einzelnen, daß die zweite Kontaktträgerführungsbahn 32 einen ebenen Abschnitt 47 und daran anschließend einen Rampenabschnitt 48 umfaßt, der eine höher als Abschnitt 47 liegende Anschlagfläche 49 bildet.

Gemäß Fig. 7 liegen die Lager- und Führungsmittel 10 vollständig innerhalb der Breite der Chipkarte 2 und insbesondere innerhalb des Außenumfangs des Rahmens 5 befinden. Dadurch ergibt sich eine außerordentlich schmale Bauweise für den erfindungsgemäßen Chipkartenleser 1.

Die erfindungsgemäßen Halte- oder Bremsmittel 17 sind insbesondere in Fig. 4, sowie 7-9 dargestellt.

In diesem Zusammenhang sei auf die Ausbildung des Rahmens 5 eingegangen, der in Fig. 7 gezeigt aus vier Rahmenteilen 51-54 besteht. Der Rahmen 5 kann ferner ein die Rahmenteile 51-54 verbindendes Bodenteil 50 besitzen, wie dies beispielsweise in Fig. 6, 8 und 9 dargestellt ist. Dieses Bodenteil 50 muß aber nicht vorhanden sein, insbesondere dann, wenn am Gerät 3 ein entsprechendes Bodenteil vorgesehen wird. Durch Weglassen des Bodenteils 50 ergibt sich eine weiter verminderte Bauhöhe für den erfindungsgemäßen Chipkartenleser. Die Trennlinie 55 in Fig. 6 gibt an, wo bei nicht erforderlichem Bodenteil 50 die Trennung vorzunehmen ist.

Die Halte- oder Bremsmittel 17 sind erfindungsgemäß in der Form von Federarmen 56 und 57 (Fig. 8) ausgebildet. Die Federarme 56 und 57 sind einstückig mit dem Rahmen 5, und zwar insbesondere dem Rahmenteil 53 ausgebildet. Jeder der Federarme besteht ebenso wie der Rahmen aus Kunststoff und ist zusammen mit diesem beispielsweise durch Kunststoffspritzguß hergestellt. Jeder der Arme 56, 57 ragt in die Rahmenöffnung 4 hinein, und zwar entgegen der Einschubrichtung der Chipkarte. Jeder der Federarme 56, 57 besitzt eine Rampenfläche 58, sowie daran anschließend eine Halte- oder Bremsfläche 59. Vor dem Einschieben der Chipkarte liegen die Rampenflächen 58 in der Bewegungsbahn der Chipkarte, so daß die Federarme 56, 57 angehoben werden können, um bei in dieser Stellung befindlicher Chipkarte mit ihren Halteflächen 59 auf der Chipkarte 2 federnd aufzuliegen und die Chipkarte 2 zu halten, die dabei gegen das Bodenteil 50 oder eine seitens des Geräts 3 vorgesehene Fläche gedrückt wird. Es können beliebig viele Federarme 56, 57 vorgesehen sein. Vorzugsweise sind zwei Federarme vorgesehen, die jeweils benachbart zu den seitlichen Rahmenteilen 52 und 54 vom Rahmenteil 53 aus ausgehend vorgesehen sind (vgl. dazu insbesondere auch die Fig. 8 und 9). Die Federwirkung der Federarme kann durch zusätzliche Federmittel verstärkt werden.

Hinsichtlich der Rahmenführungsbahnen 34, 35 sei noch darauf hingewiesen, daß diese in den beiden seitlichen Rahmenteilen 52, 54 ausgebildet sind, und zwar insbesondere benachbart zur der vom Rahmen gebildeten Öffnung 46.

Der Kontaktträger 6 kann mit seinen seitlichen Führungselementen 23-26 ohne weiteres in die Öffnung 46 derart eingesetzt werden, daß die entsprechenden kontaktträgerseitigen und rahmenseitigen Führungsbahnen miteinander in Berührung kommen. In der Ausgangsstellung des Kontaktträgers 6 (vgl. dazu die feingestrichelte Darstellung in Fig. 3), ergibt sich eine ausreichende Überlappung 61 und 62 zwischen ebenen Abschnitten 42 und 47 bzw. 31 und 39.

Der Kontaktträger 6 trägt an seiner Unterseite 64 (vgl. beispielsweise Fig. 5) zwei (vgl. Fig. 7) Mitnehmer 65, die in die Einschubbahn der Chipkarte 2 ragen. Am entgegengesetzt liegenden Ende des Kontaktträgers 6 sind benachbart zu den Rahmenteilen 52, 54 nach oben ragende Vorsprünge 66 vorgesehen, die als Anschläge für die beiden Schenkel einer Bügelfeder dienen, welche die bereits erwähnten Federmittel 8 bildet. Die Feder ist zum anderen mittig an einer Verankerung 67 (vgl. Fig. 4 und 7) des Rahmens 5 angeordnet.

Etwa mittig im Kontaktträger 6 ist ein Kontaktsatz 69 angeordnet, dessen Kontaktelemente 20 beispielsweise mit einem Flachkabel oder einer Leiterfolie 70 herausgeführt sind. Der Kontaktsatz 69 kann gesondert gefertigt und mit dem Kontaktträger 6 verbunden sein. Vorzugsweise sind aber Kontaktsatz 69 und Kontaktträger 6 ein einziges vorzugsweise im Spritzgußverfahren hergestelltes Teil.

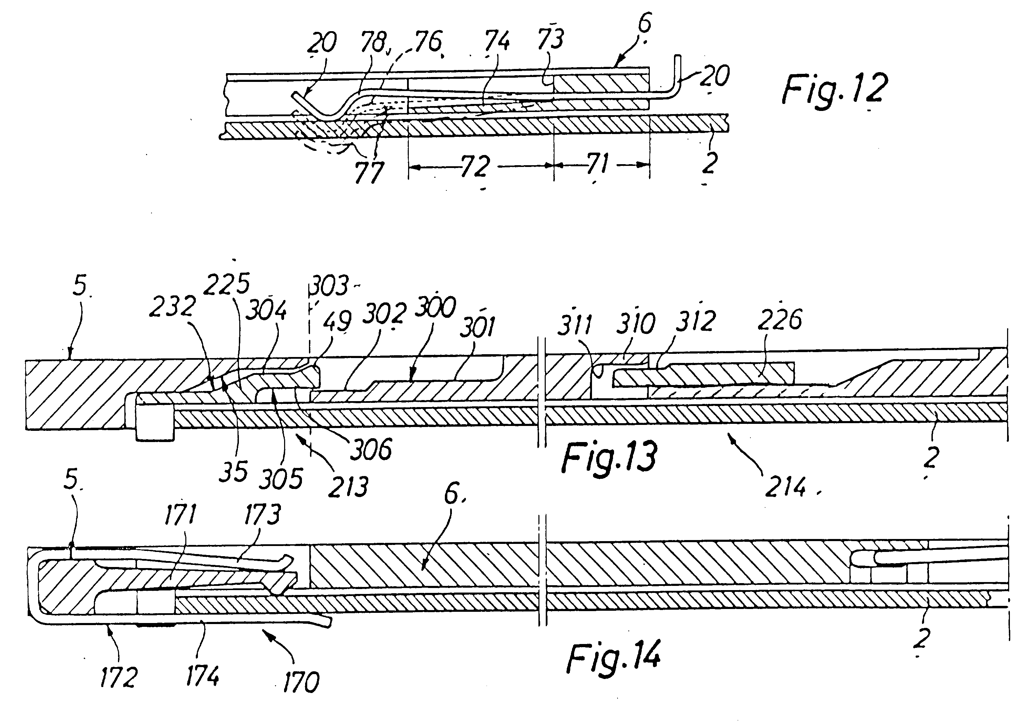

Die einzelnen Kontaktelemente 20 des Kontaktsatzes sind vorzugsweise mit Vorspannung in dem Kontaktsatz 69 bzw. den Kontaktträger 6 eingespritzt, was im einzelnen in Fig. 12 für ein Kontaktelement 20 dargestellt ist. Das Kontaktelement 20 gemäß Fig. 12 besitzt rechts entweder einen nicht näher gezeichneten Schneidklemmanschluß für das Flachkabel oder ein Lötpin für eine flexible Schaltung 70. Daran anschließend ist das Kontaktelement 20 mit einem ersten Bereich 71 von Kunststoffmaterial umspritzt und liegt mit einem zweiten Bereich 72 auf einer durch eine Vertiefung 73 gebildeten Auflagefläche 74 auf. Diese vorgespannte Ruhestellung des Kontaktelements 20 ist mit 76 bezeichnet. Mit 77 ist die nicht vorgespannte Lage des Kontaktelements 20 bezeichnet und 78 ist die Lage des Kontaktelements 20 für den Fall dargestellt, wo Kontaktgabe mit einer Chipkarte erfolgt. In Fig. 7 erkennt man, daß mehrere Vertiefungen 73 für jeweils ein Kontaktelement 20 vorgesehen sind. Die freien Enden der Kontaktelemente ragen in eine Öffnung 79.

Ferner ist der bereits erwähnte Endlagenschalter 21 in der insbesondere in den Fig. 6 und 7 gezeigten Weise vorgesehen. Der Endlagenschalter 21 weist zwei Kontaktelemente 80, 81 auf, wobei am Kontaktelement 80 ein sich unter das Kontaktelement 81 erstreckender Arm 82 vorgesehen ist. Die beiden Kontaktelemente 80 und 81 sind Blattfederkontakte, was eine kostengünstige Fertigung sowie eine geringe Bauhöhe ermöglicht. Der Endlagenschalter 21 wird nach Erreichen der Lesestellung des Kontaktträgers 6 durch den Rahmen 5 betätigt. Insbesondere ist am Rahmen 5 ein Vorsprung 83 vorgesehen, auf den das Blattfederkontaktelement 80 aufläuft und dadurch über Arm 82 die Verbindung zum Kontakt 81 herstellt. Dadurch wird der Stromkreis geschlossen und der sich in Lesestellung befindliche Kontaktträger 6 ist in Betrieb. Die Kontaktelemente 80, 81, insbesondere aber das Kontaktelement 80, erstrecken sich in Längsrichtung, und zwar in Einschubrichtung der Chipkarte. Nachdem das Blattfederkontaktelement 80 durch den Vorsprung 83 im wesentlichen nach oben gedrückt wird, ergibt sich eine vernachlässigbar geringe Kraftkomponente in Schließstellung des Endlagenschalters 21, die entgegen der Einschubrichtung der Karte wirkt.

Bei Verwendung des erfindungsgemäßen Chipkartenlesers 1 wird eine Chipkarte 2 in die von Rahmen 6 und Bodenteil 50 bzw. Gerät 3 gebildetete Einführöffnung 84 (vgl. Fig. 6) eingeschoben, bis die Karte an den Mitnehmern 65 zum Anschlag kommt und bei fortgesetzter Einschubbewegung der Karte 2 den Kontaktträger 6 aus der (vgl. Fig. 7) fein gestrichelten Ausgangsstellung in die mit ausgezogenen Linien dargestellte Lesestellung bewegt. Die Fig. 8 und 9 zeigen die Lesestellung bzw. die Ausgangsstellung. Bei der Bewegung der Karte 2 zusammen mit dem Kontaktträger 6 erfolgt der Übergang von der in Fig. 3 fein gestrichelten Stellung in die mit ausgezogenen Linien dargestellte Lesestellung. Es ist ersichtlich, daß bei dieser Bewegung der Kontaktträgers 6 im Rahmen 5 der Kontaktträger 6 von dem durch die ebenen Abschnitte 33 und 39 definierten Ebene über Schrägen heruntergeführt wird auf eine durch die ebenen Abschnitte 40 und 47 definierte Höhe. In der Lesestellung werden die Kontaktelemente 20 gegen die auf der Chipkarte vorhandenen Kontakte gedrückt, und zwar insbesondere auch durch die den Kontaktelementen 20 innewohnende Vorspannung. Ferner unterstützen die Anschlagflächen 49. Die bereits erwähnten Bremsmittel 17 halten die Karte in der Lesestellung.

Nachdem der Lesevorgang beendet ist, wird an der noch aus der Öffnung 84 herausstehenden Karte gezogen und diese dabei von den Bremsmitteln 17 wegbewegt, wobei dann gleichzeitig durch die Federmittel 8 der Kontaktträger 6 wieder in seine Ausgangsstellung zurückgebracht und vom Benutzer entnommen wird.

Fig. 13 zeigt eine bevorzugte Ausgestaltung der zweiten und dritten Führungseinrichtungen 12 und 13 gemäß den Fig. 2 und 3, wobei anhand der Fig. 13 lediglich die Verbesserung der dritten Führungseinrichtung erläutert wird. Letztere ist in Fig. 13 mit 213 bezeichnet. Sinngemäß gelten die Ausführungen auch für eine entsprechend vorzusehende zweite Führungseinrichtung, die der zweiten Führungseinrichtung 12 ensprechen würde. Im übrigen können bei der Ausgestaltung der Erfindung gemäß Fig. 13 zusätzlich auch die ersten und vierten Führungseinrichtungen 11 und 14 verbessert werden, und zwar durch Hinzufügung einer Begrenzung im Bereich der hier mit 214 bezeichneten dritten Führungseinrichtung.

Geht man zunächst auf die Führungseinrichtung 213 ein, so wird das Führungselement 25 in das Führungselement 225 dadurch umgewandelt, daß man einerseits Material oben aufpackt und unten ausspart. Die zweite Rahemführungsbahn 35 ist ebenso wie beim Ausführungsbeispiel gemäß Fig. 11 vorhanden, wobei aber zusätzlich noch eine weitere Rahmenführungsbahn 300 vorgesehen ist, die höhenmäßig versetzte Führungsflächen 301 und 302 umfaßt. Die Rahmenführungsfläche 302 endet an einer gestrichelten, in Fig. 13 gezeigten Vertikallinie 303, an der auch die zweite Rahmenführungsbahn 35 endet.

Im einzelnen ist hier im Anschluß an die Anschlagfläche 49 eine ebene Führungsfläche 304 durch das aufgepackte Material gebildet. Dort wo Material am Führungselement 225 ausgespart wurde, vergleiche die Aussparung 305, wird eine ebene Führungsfläche 306 gebildet, die sich über Flächen 302 und 301 schieben kann.

Was nun die dritte Führungseinrichtung 214 anlangt, so ist diese in gleicher Weise ausgebildet wie eine nicht gezeigte zweite Führungseinrichtung und weist, vergleiche dazu den rechten Teil der Fig. 11, eine am Rahmen 5 ausgebildete Begrenzung 310 auf, die eine Führungsfläche 311 bildet, die mit einer Führungsfläche 312 am Führungselement 226 zusammenarbeitet. Durch diese erfindungsgemäßen Maßnahmen werden jedwede Kippbewegungen des Rahmens vermieden.

In Fig. 14 ist in einer der Fig. 4 ähnlichen Darstellung eine Weiterbildung der Bremsmittel 17 gezeigt, die hier mit dem Bezugszeichen 170 versehen sind. Die Bremsmittel 170 weisen ähnlich wie die Bremsmittel 17 einen einstückig mit dem Rahmen 5 ausgebildeten Federarm 171 auf, der aber hier in seiner Wirkung noch durch zusätzliche Federmittel verstärkt ist, und zwar in der Form einer Metallblattfeder 172, die zwei Federarme 173 und 174 aufweist. Der Federarm 173 liegt von oben her auf dem Federarm 171, während der Federarm 174 den Rahmen 5 von unten her umfaßt. Die Bremsmittel 170 sind insgesamt am Rahmen 5 angeordnet und benötigen für die Arbeitsweise kein Unterteil.

Im einzelnen sei auf folgende Merkmale der Erfindung higewiesen. Das Chip-Kartenlesegerät hat einen stationären Rahmen (5), der eine Öffnung (4) bildet, in dem ein Kontaktträger (6) zur Kontaktierung einer Chip-Karte (2) zwischen einer Ausgangsstellung und einer Lesestellung und zurück zur Ausgangsstellung hin- und herbewegbar unter Verwendung von Führungsmitteln (10) angeordnet ist. Der Rahmen (5) hat eine, vorzugsweise mehrere Führungsbahnen (34, 35) und am Kontaktträger (6) sind eine vorzugsweise mehrere Führungsbahnen (31, 32) vorgesehen, die gemeinsam bei in den Rahmen (5) eingesetztem Kontaktträger (6) eine formschlüssige Führung für die Bewegung des Kontaktträgers zwischen Ausgangs- und Lesestellung bilden. Die Führungsbahnen für den Kontaktträger sehen zwischen der Ausgangsstellung und der Lesestellung eine Bewegung derart vor, daß der Kontaktträger zunächst auf einem Niveau in Richtung zur Lesestellung hinbewegt wird, um daran anschließend allmählich auf ein zweites gegenüber dem ersten Niveau höhenmäßig versetztes Niveau gebracht zu werden, wobei dann der Kontaktträger längs dieses zweiten Niveaus bis zur Lesestellung bewegt wird. Das Eingeben der Chip-Karte, die Bewegung derselben aus der Ausgangsstellung in die Lesestellung und wieder zurück zur Ausgangsstellung sowie die Entnahme der Chip-Karte daraus erfolgt nach dem Push-Pull(Schub-Zug)-Prinzip. Der Kontaktträger (6) ist zusammen mit einem Kontaktsatz (69) einstückig ausgebildet. Die Kontaktträgerführungsbahnen (31, 32) sind direkt am Kontaktträger ausgebildet. Ferner gilt vorzugsweise folgendes: daß die Kontaktträgerführungsbahnen und die Rahmenführungsbahnen innerhalb des Umrisses der Chip-Karte (2) angeordnet sind; daß vier Führungsbahnpaare vorgesehen sind; daß sechs Führungsbahnpaare vorgesehen sind; daß für vier Führungspaare die jeweils kreuzweise oder diagonal gegenüberliegenden Paare identisch sind; daß die Kontaktträgerführungsbahnen (31, 32) an Führungselementen (23-26) des Kontaktträgers (6) ausgebildet sind; daß die Rahmenführungsbahnen (34, 35) an den Innenseiten der seitlichen Rahmenteile (52, 54) ausgebildet sind; daß gegenüberliegende Führungsbahnpaare eine formschlüssige Führung bilden, wobei das eine Führungsbahnpaar nach oben und das andere Führungsbahnpaar nach unten begrenzt; daß der Rahmen zusammen mit den Führungsbahnen und gegebenenfalls mit dem Bodenteil (50) einstückig ausgebildet ist; daß die zusammenarbeitenden Kontaktträgerführungsbahnen und Rahmenführungsbahnen eine Parallelabsenkung (oder Parallelabhebung) des Kontaktträgers (6) bewirken; daß die Führungsbahnen derart vorgesehen sind, daß sich für den Kontaktträger bei seiner Bewegung aus der Ausgangsstellung in die Lesestellung eine Bewegung zunächst längs einer Waagerechten, dann längs einer Schräge und sodann wiederum längs einer Waagerechten in Richtung auf die Lesestellung ergibt; daß die Führungsbahnpaare Führungseinrichtungen (11-14) bilden, die bei einer Verbindung durch Diagonale den Kreuzungspunkt der Diagonalen etwa im Mittelpunkt des Kontaktsatzes (69) des Kontaktträgers (6) anordnen; daß sich die Führungselemente (23-26) von den Seiten des Kontaktträgers (6) in Richtung auf die seitlichen Rahmenteile (52, 54) hin erstrecken und vorzugsweise zusammen mit dem Kontaktträger (6) durch Spritzguß hergestellt sind; daß die Führungselemente (23-26) eine solche Länge besitzen, daß sich in Ausgangsstellung jeweils eine Überdeckung (61, 62) ergibt (Fig. 3); daß die Kontaktelemente (20) des Kontaktträgers vorgespannt sind, so daß sich ein kurzer Hub und damit eine geringe Bauhöhe ergibt; daß die Kontaktelemente beim Einspritzen vorgespannt werden; daß die Kontaktelemente vorgespannt montiert werden; daß ein Endlagenschalter (21) vorgesehen ist, der zwei Blattfederkontakte (80, 81) aufweist, von denen der eine kurz nach Erreichen der Lesestellung durch Auflaufen auf den Rahmen betätigt wird; daß am Rahmen ein als Schaltnocken wirkender Vorsprung (83) zur Betätigung des Endlagenschalters (21) vorgesehen ist; daß der Endlagenschalter (21) einen oben liegenden Kontakt (81) und einen unten liegenden Kontakt (80) aufweist, wobei der unten liegende Kontakt durch den Vorsprung betätigbar ist, um über einen Arm mit dem oben liegenden Kontakt in Berührung zu kommen, und wobei ferner der untere Kontakt in der Lesestellung auf dem Vorsprung aufliegt und so keine in Entnahmerichtung, d.h. zur Ausgangsstellung hin gerichtete Kraft, auf den Kontaktträger ausübt; daß im Rahmen eine Kartenbremse derart vorgesehen ist, daß diese nicht der Kontaktkraft entgegenwirkt; daß auf die Kartenbremse eine Metallblattfeder aufgesetzt ist, um die Bremskraft zu verstärken; daß die Kartenbremse auf die Karte drückt; daß die Kartenbremse einstückig mit dem Rahmen aus Kunststoff ausgebildet ist und durch das Einschieben der Chip-Karte in eine angehobene Bremsposition gebracht wird; daß zwei hakenförmige Bremsmittel (17) mit Abstand vorgesehen sind; daß Federmittel (8) vorgesehen sind, welche den Kontaktträger (6) in die Ausgangsstellung vorspannen; daß die Federmittel (8) eine Bügelfeder sind, die mit zwei Federarmen am Kontaktträger angreift und andererseits am Rahmen befestigt ist; daß die Bügelfeder benachbart zur Eingabeöffnung für die Chip-Karte vorgesehen ist. Ferner ist bei einem Gerät mit einem stationären Bauteil, insbesondere einem Rahmen (5), in dem ein bewegliches Bauteil, insbesondere ein Kontaktträger (6) zwischen einer Ausgangsstellung und einer Lesestellung hin- und herbewegbar ist, und wobei Führungsmittel am festen und beweglichen Bauteil vorgesehen sind, welche die Hin- und Herbewegung ermöglichen, vorgesehen, daß die Führungsmittel (10) eine oder mehrere Führungseinrichtungen (11-14) aufweisen, welche den Kontaktträger (6) aus einer gegenüber dem Rahmen (5) höhenmäßig versetzten Ausgangsstellung in eine Lesestellung führen, in der die Kontakte der Chip-Karte durch die Kontakte des Kontaktträgers (6) kontaktiert werden; daß der Kontaktträger bei seiner Bewegung aus der Ausgangsstellung in die Lesestellung zunächst auf gleicher Höhe in Richtung auf die Lesestellung bewegt wird, um dann über eine in Richtung der Lesestellung abfallende Schräge zu einer höhenmäßig gegenüber der Lage der Anfangsstellung versetzten ebenen Fläche zu gelangen, längs welcher der Kontaktträger weiter bis zum Erreichen der Lesestellung bewegt wird; daß die Karte nach dem sogenannten Push-Pull-Prinzip in den Kontaktträger eingesetzt wird und beim Einschieben den Kontaktträger aus der Anfangsstellung in die Lesestellung mitnimmt, und wobei zum Entfernen der Chip-Karte aus dem Lesegerät die Karte aus der Lesestellung in Richtung Ausgangsstellung gezogen wird, wobei gleichzeitig der Kontaktträger in die Ausgangsstellung zurückgeführt wird; daß die zweiten und dritten Führungseinrichtungen jeweils ein Führungselement aufweisen, bei dem einerseits Material oben aufgepackt und andererseits unten ausgespart ist; daß eine weitere Rahmenführungsbahn (300) vorgesehen ist, die insbesondere höhenmäßig versetze Führungsflächen (301, 302) aufweist; daß die Rahmenführungsfläche (302) aus entgegengestzter Richtung kommend an der gleichen Vertikallinie 303 wie die zweite Rahmenführungsbahn (35) endet; daß am Führungselement (225) eine ebene Führungsfläche (306) gebildet ist, die sich über Flächen (302, 301) schieben kann; daß die zweite und dritte Führungseinrichtung eine Begrenzung (310) aufweist, die eine Führungsfläche (311) bildet; und daß die Bremsmittel einen einstückig mit dem Rahmen ausgebildeten Federarm (171) aufweisen, der durch eine Metallblattfeder (172) verstärkt ist.

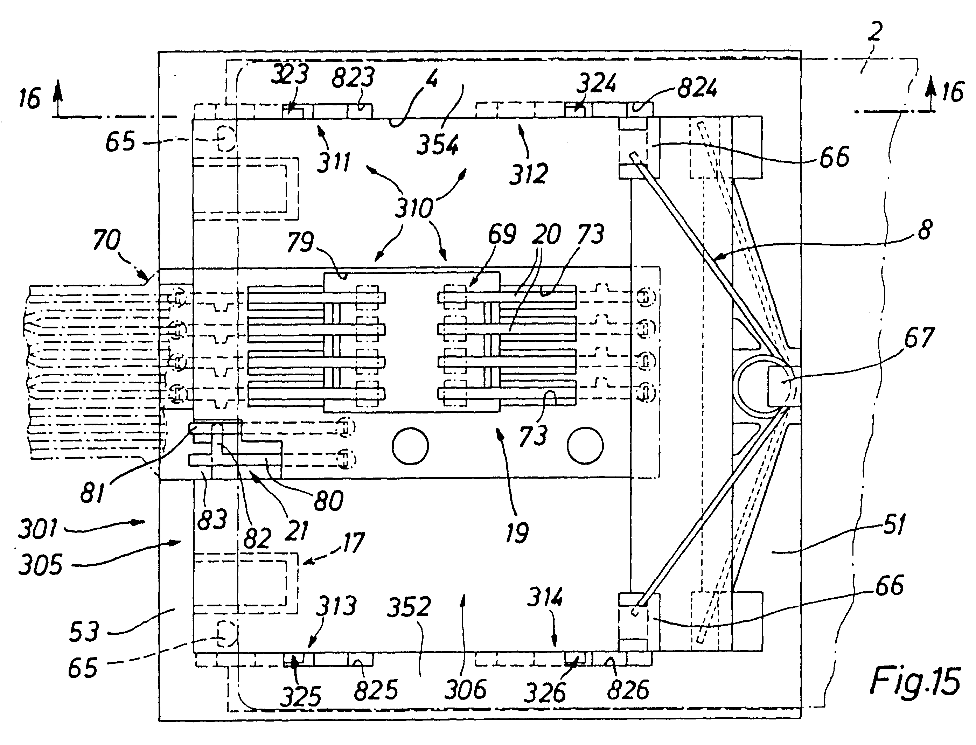

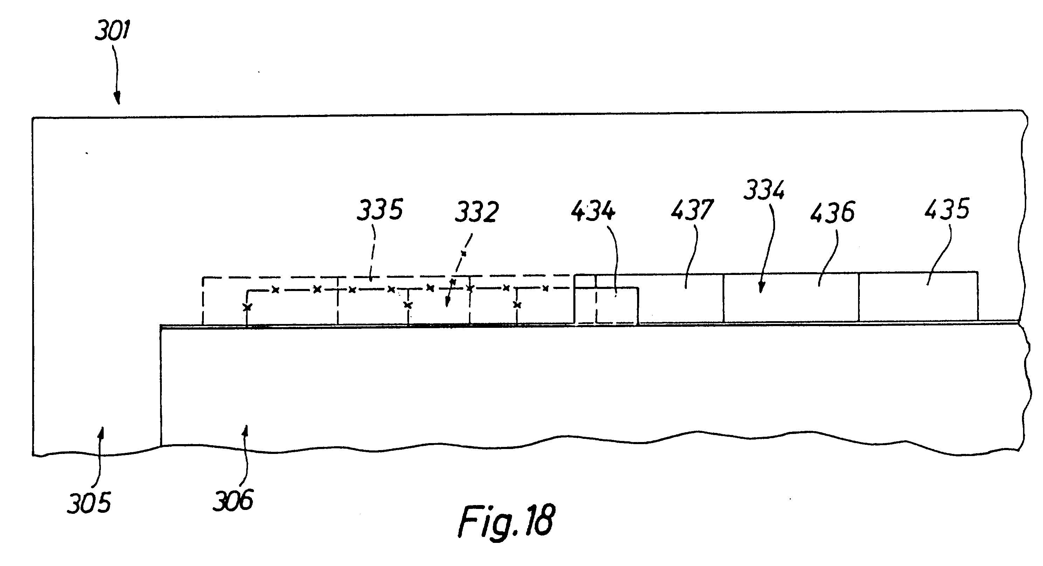

In den Figuren 15 bis 18 ist eine weitere bevorzugte Ausgestaltung eines Chip-Kartenlesers 301 dargestellt. Dieser Chip-Kartenleser 301 stimmt in wesentlichen Teilen mit dem Chip-Kartenleser 1 gemäß Fig. 1 bis 14 überein, was sich aus den in den Fig. 7 und 15 übereinstimmenden Bezugszeichen ergibt.

Der Hauptunterschied zwischen dem Chip-Kartenleser 1 und 301 besteht darin, daß andere Lager- und Führungsmittel 310 gemäß Fig. 15 vorgesehen sind, welche die Absenkbewegung für den Kontaktträger 306 bei dessen Bewegungen im Rahmen 305 von der Ausgangsstellung in die Lesestellung (und umgekehrt auch die Anhebbewegung von der Lese- in die Ausgangsstellung) bewirken.

Die Lager- und Führungsmittel 310 sind beim Chip-Kartenleser 301 durch erste bis vierte Führungseinrichtungen 311 bis 314 gebildet, die in der Nähe der vier Ecken des Kontaktträgers 306 und entsprechend auch im Rahmen 305 vorgesehen sind.

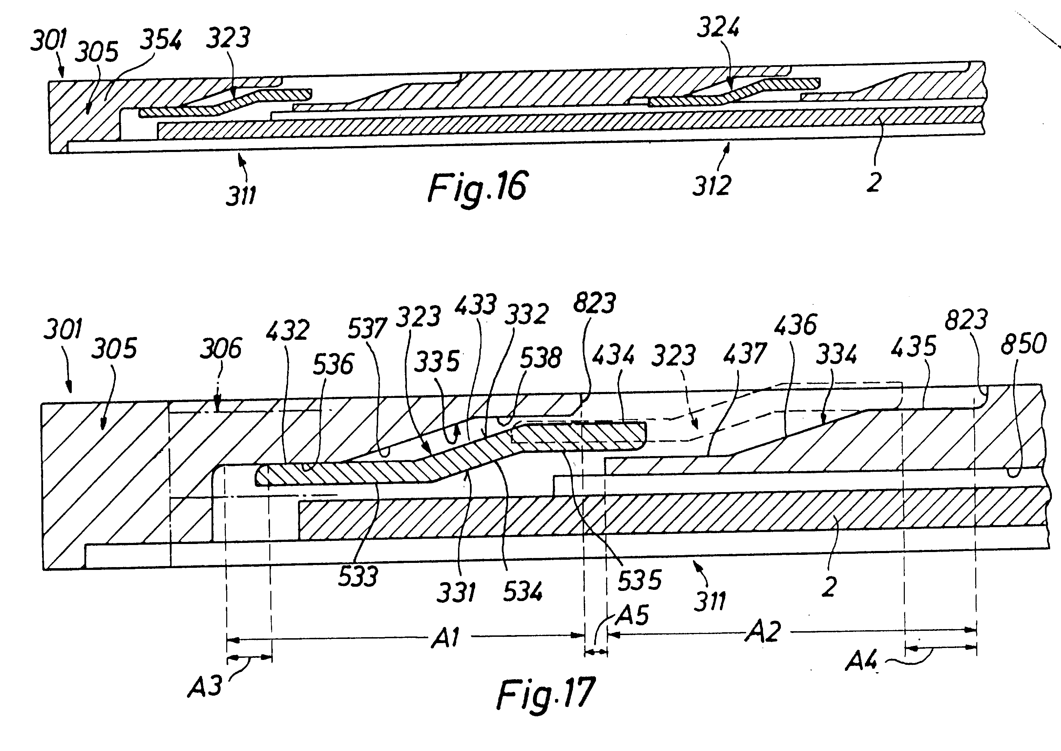

Die ersten und zweiten Führungseinrichtungen 311 und 312 sind identisch; gleiches gilt auch für die dritten und vierten Führungseinrichtungen 313, 314. Darüber hinaus ist die dritte Führungseinrichtung spiegelbildlich zur ersten Führungseinrichtung und die vierte Führungseinrichtung ist spiegelbildlich zur zweiten Führungseinrichtung 312 ausgebildet. Aus diesem Grunde sind in Fig. 16 nur die ersten und zweiten Führungseinrichtungen 311 und 312 dargestellt und Fig. 17 zeigt nur die erste Führungseinrichtung 311, die im folgenden repräsentativ für die anderen Führungseinrichtungen 312, 313, 314 beschrieben werden soll.

Jede der ersten bis vierten Führungseinrichtungen 311 bis 314 weist für eine formschlüssige Führung bei der Bewegung des Kontaktträgers 306 von der Ausgangsstellung in die Lesestellung (und umgekehrt) rahmenseitige und kontakträgerseitige Führungsbahnen auf. Die rahmenseitigen Führungsbahnen sind (für die Führungseinrichtung 311) mit 334 und 335 bezeichnet, während die kontaktträgerseitigen Führungsbahnen mit 331 und 332 bezeichnet sind.

Im dargestellten Ausführungsbeispiel sind die kontaktträgerseitigen Führungsbahnen 331 und 332 an einem ersten Führungselement 323 ausgebildet, was analog auch für die anderen Führungseinrichtungen 312, 313, 314 gilt, dieFührungselemente 324, 325, 326 aufweisen. Jedes Führungselement ist einstückig mit dem Kontaktträger 306 ausgebildet und hat eine im ganzen stegförmige zweimal geknickte Gestalt, von im ganzen gleichmäßiger Stärke. Die rahmenseitigen Führungsbahnen sind an den Innenseiten der seitlichen Rahmenteile 352 und 354 ausgebildet.

Es ist auch denkbar, die rahmenseitigen Führungsbahnen an Führungsteilen auszubilden, die von den Innenseiten der seitlichen Rahmenteile nach innen vorspringen und in entsprechende Ausnehmungen des Kontaktträgers eingreifen, in dem dann die kontaktträgerseitigen Führungsbahnen ausgebildet sind.

Die erste oder untere kontaktträgerseitige Führungsbahn 331 weist im wesentlichen drei Abschnitte auf, und zwar einen ebenen Abschnitt 533, einen daran anschließenden nach oben geneigt verlaufenden Rampenabschnitt 534 und sodann wiederum einen ebenen Abschnitt 535, der gegenüber dem ebenen Abschnitt 533 auf einem höheren Niveau liegt. Die zweite oder obere kontaktträgerseitige Führungsbahn 332 weist ebenfalls einen ebenen Abschnitt 432, einen einen geneigten Rampenabschnitt 433 und wiederum einen ebenen Abschnitt 434 auf, welch letzterer wiederum auf einem höheren Niveau gegenüber dem Abschnitt 432 liegt.

Die rahmenseitigen Führungsbahnmittel weisen vorzugsweise eine erste rahmenseitige Führungsbahn 334 und eine zweite rahmenseitige Führungsbahn 335 auf. Diese rahmenseitigen Führungsbahnen sind praktisch komplementär zu den zugehörigen kontaktträgerseitigen Führungsbahnen 331, 332 ausgebildet.

Im einzelnen weist die erste oder untere rahmenseitige Führungsbahn 334 einen ebenen Abschnitt 435, daran anschließend einen geneigten Rampenabschnitt 436 und sodann wiederum daran anschließend einen ebenen Abschnitt 437 auf. Der Abschnitt 437 ist höhenmäßig gegenüber dem ebenen Abschnitt 435 nach unten versetzt.

In gleicher Weise weist die zweite oder obere rahmenseitige Führungsbahn 335 einen ebenen Abschnitt 536, daran anschließend einen geneigten Rampenabschnitt 537 und daran wiederum anschließend einen ebenen Abschnitt 538 auf, welch letzterer wiederum gegenüber dem ersten ebenen Abschnitt 536 höhenmäßig nach oben versetzt ist.

In den Figuren 15 bis 18 befindet sich der Kontaktträger 306 in seiner Lesestellung. Man erkennt in den Figuren 16 und 17, daß dabei insbesondere die ebenen Abschnitte 432 und 536 in Eingriff miteinander stehen. Die Ausgangsstellung ist in Fig. 15 und 17 gestrichelt dargestellt, wobei sich hier insbesondere die Abschnitte 435 und 535 einander berühren.

Bei der Bewegung des Kontaktträgers 306 aus der Ausgangsstellung in die Lesestellung erfolgt die Führung durch die Führungsbahn 334 und/oder die Führungsbahn 335.

Wie bei den anderen Ausführungsbeispielen wird auch hier der Rahmen 305 gesondert vom Kontaktträger 306 aus Kunststoff hergestellt. Beim Zusammenbau wird der Kontaktträger 306 wird mit seinen Führungselementen 323 bis 326 in an der Oberseite des Rahmens 305 in benachbart zu dessen quadratischer Öffnung 4 gebildete Ausnehmungen (vgl. Fig. 15)823, 824, 825 und 826 eingelegt. Durch Druck auf den Kontaktträger 306 im Bereich der Führungselemente 324, 326 gelangen die ebenen Abschnitte 432 unter die zugehörigen ebenen Abschnitte 538 und die beiden Vorsprünge 66 (siehe Fig. 15) schnappen in den Bereich der Öffnung 4 hinein und bilden so Anschläge für die Begrenzung der in Fig. 15 gestrichelt angedeuteten Ruhe- oder Ausgangsstellung.

Hinsichtlich des Aufbaus des Chip-Kartenlesers 301 sei unter Bezugnahme auf Fig. 17 noch darauf hingewiesen, daß eine Ausnehmung 850 im Rahmenteil 54 vorgesehen ist und spiegelbildlich dazu auch eine nicht gezeigte Ausnehmung im Rahmenteil 352. Ferner erkennt man, daß die Länge A1 der Führungsbahn 335 im wesentlichen gleich der Länge A2 der Führungsbahn 334 ist. Die inneren Enden der Führungsbahnen 334 und 335 überlappen sich nicht, sondern haben einen kleinen Abstand A5. Ferner hat das wirksame Ende der Führungsbahn 334 in der Lesestellung noch einen Abstand A3 vom Ende der Führungsbahn 335. Umgekehrt hat das wirksame Ende der kontaktträgerseitigen Führungsbahn 331 in der Ruhestellung noch einen Abstand A4 vom Ende der kontaktträgerseitigen Führungsbahn 334.

## Patentansprüche

1. Chip-Karten-Kontaktier- bzw. Lesegerät mit einem stationärem Rahmen (5; 305), der eine Öffnung (4) bildet, in der ein Kontaktträger (6; 306) zur Kontaktierung einer Chip-Karte (2) zwischen einer Ausgangsstellung und einer Lesestellung und zurück zur Ausgangsstellung hin- und herbewegbar unter Verwendung von Führungsmitteln (10) angeordnet ist, wobei eine, vorzugsweise mehrere Rahmenführungsbahnen (34, 35; 334, 335) an den Innenseiten seitlicher Rahmenteile (52, 54; 352, 354) des Rahmens (5; 305) ausgebildet sind, und
am Kontaktträger (6; 306) eine, vorzugsweise mehrere Kontaktträgerführungsbahnen (31, 32; 331, 332) vorgesehen sind, die gemeinsam bei in den Rahmen (5; 305) eingesetztem Kontaktträger (6; 306) eine formschlüssige Führung für die Bewegung des Kontaktträgers zwischen Ausgangs- und Lesestellung bilden,
dadurch gekennzeichnet, daß
gegenüberliegende Führungsbahnpaare die formschlüssige Führung bilden, und daß jede der kontaktträgerseitigen und rahmenseitigen Führungsbahnen mindestens drei Abschnitte aufweist, und zwar ebene, aber höhenmäßig versetzte Abschnitte, die durch einen geneigten Rampenabschnitt verbunden sind.

2. Lesegerät nach Anspruch 1, dadurch gekennzeichnet, daß
benachbart zu jeder der vier Ecken des Kontaktträgers (6; 306) eine Rahmenführungsbahnen und Kontaktträgerführungsbahnen aufweisende Führungseinrichtung vorgesehen ist,
daß die dem einen seitlichen Rahmenteil (354) zugeordneten dritten und vierten Führungseinrichtungen (313, 314) ausgebildet sind, und
daß die ersten und zweiten Führungseinrichtungen spiegelbildlich zu den dritten und vierten Führungseinrichtungen ausgebildet sind.

3. Lesegerät nach Anspruch 1 oder 2, dadurch gekennzeichnet, daß die kontaktträgerseitigen Führungsbahnen an Führungselementen (323, 324, 325, 326) ausgebildet sind.

4. Lesegerät nach einem oder mehreren der vorhergehenden Ansprüche, dadurch gekennzeichnet, daß die Führungselemente von dem Kontaktträger (306) seitlich wegragen und in Bewegungsrichtung gesehene Längen besitzen, die kleiner oder gleich den Längen von Öffnungen (823, 824, 825, 826) sind, welche in den seitlichen Rahmenteilen ausgebildet sind und Zugang zu den rahmenseitigen Führungsbahnen eröffnen.

5. Lesegerät nach einem oder mehreren der vorhergehenden Ansprüche, dadurch gekennzeichnet, daß untere und obere kontaktträgerseitige Führungsbahnen (331, 332) für jedes Führungselement (323 bis 326) vorgesehen sind, und zwar zur Zusammenarbeit mit unteren und oberen rahmenseitigen Führungsbahnen (334, 335).

6. Chip-Karten-Kontaktier- bzw. Lesegerät mit einem stationärem Rahmen (305), der eine Öffnung bildet, in der ein Kontaktträger (306) zur Kontaktierung einer Chip-Karte (2) unter Verwendung von Führungsmitteln (331, 332, 334, 335) hin- und herbewegbar zwischen einer Ausgangsstellung und einer Lesestellung angebracht ist,
wobei mindestens eine, vorzugsweise mehrere Rahmenführungsbahnen (334, 335) an den Innenseiten seitlicher Rahmenteile (352, 354) des Rahmens (305) ausgebildet sind, und
wobei am Kontaktträger (306) Führungselemente (323, 324, 325, 326) vorgesehen sind,
dadurch gekennzeichnet, daß gegenüberliegende Führungsbahnpaare die formschlüssige Führung bilden, und daß
jedes Führungselement (323, 324, 325, 326) mindestens eine, vorzugsweise mehrere Kontaktträgerführungsbahnen (331, 332) aufweist, die gemeinsam bei in den Rahmen (305) eingesetzten Kontaktträger (306) eine formschlüssige Führung für die Bewegung des Kontaktträgers zwischen Ausgangs- und Lesestellung bilden,
wobei jedes Führungselement (323, 324, 325, 326) eine im ganzen stegförmige, zweimal in entgegengesetzte Richtungen leicht geknickte Gestalt von im ganzen gleichmäßiger Stärke besitzt.

7. Chip-Karten-Kontaktier- bzw. Lesegerät gemäß Anspruch 6, dadurch gekennzeichnet, daß die Führungselemente (323, 324, 325, 326) von dem Kontaktträger (306) seitlich wegragen und eine in Bewegungsrichtung gesehene Länge besitzen, die kleiner oder gleich der Länge von Öffnungen (823, 824, 825, 826) ist, welche in den seitlichen Rahmenteilen ausgebildet sind und Zugang zu den rahmenseitigen Führungsbahnen eröffnen.

8. Chip-Karten-Kontaktier- bzw. Lesegerät gemäß Anspruch 6 oder 7, dadurch gekennzeichnet, daß jede der Führungsbahnen (331, 332, 334, 335) drei Abschnitte aufweist, und zwar zwei ebene, höhenmäßig versetzte Abschnitte, die durch einen geneigten Rampenabschnitt verbunden sind.

9. Chip-Karten-Kontaktier- bzw. Lesegerät gemäß einem der vorhergehenden Ansprüche, dadurch gekennzeichnet, daß die benachbarten, inneren Enden der rahmenseitigen Führungsbahnen (334, 335) sich nicht überlappen, sondern in Einschubrichtung einen kleinen Abstand (A5) haben.

10. Chip-Karten-Kontaktier- bzw. Lesegerät gemäß einem der vorhergehenden Ansprüche, dadurch gekennzeichnet, daß die Führungsmittel (331, 332, 334, 335) vollständig innerhalb der Breite der Chip-Karte (2) angeordnet sind.

11. Chip-Karten-Kontaktier- bzw. Lesegerät gemäß einem der vorhergehenden Ansprüche, dadurch gekennzeichnet, daß der Kontaktträger (306) als Blattfederkontakte ausgebildete Kontaktelemente (20) aufweist.

12. Chip-Karten-Kontaktier- bzw. Lesegerät gemäß Anspruch 11, dadurch gekennzeichnet, daß die Kontaktelemente (20) in dem Kontaktträger (306) eingespritzt sind.

13. Chip-Karten-Kontaktier- bzw. Lesegerät gemäß Anspruch 11 oder 12, daß die Kontaktelemente (20) in ihrer Ruhestellung (76) vorgespannt sind.

14. Chip-Karten-Kontaktier- bzw. Lesegerät gemäß einem der vorhergehenden Ansprüche, dadurch gekennzeichnet, daß ein Endlagenschalter (21) vorgesehen ist, der als Blattfederkontakte ausgebildete Kontaktelemente (80, 81) aufweist.

15. Chip-Karten-Kontaktier- bzw. Lesegerät gemäß Anspruch 14, dadurch gekennzeichnet, daß der Endlagenschalter (21) auf dem Kontaktträger (306) eingespritzt ist.

16. Chip-Karten-Kontaktier- bzw. Lesegerät gemäß Anspruch 14 oder 15, dadurch gekennzeichnet, daß der Endlagenschalter (21) bei Erreichen der Lesestellung des Kontaktträgers (306) durch einen Vorsprung (83) am Rahmen (305) betätigt wird.

17. Chip-Karten-Kontaktier- bzw. Lesegerät gemäß einem der vorhergehenden Ansprüche, dadurch gekennzeichnet, daß am Rahmen (305) eine Kartenbremse (170) angeordnet ist, die in ihrer Wirkung durch Federmittel (172) verstärkt ist.

18. Chip-Karten-Kontaktier- bzw. Lesegerät gemäß Anspruch 17, dadurch gekennzeichnet, daß die Federmittel (172) eine Metallblattfeder aufweisen, die zwei Federarme (173, 174) besitzt, welche einen einstückig mit dem Rahmen (305) ausgebildeten Federarm (171) von oben bzw. von unten her umfassen.

19. Chip-Karten-Kontaktier- bzw. Lesegerät gemäß einem der vorhergehenden Ansprüche, dadurch gekennzeichnet, daß der Kontaktträger (306) an seiner Unterseite (64) zwei Mitnehmer (65) trägt, die in die Einschubbahn der Chip-Karte (2) ragen.

20. Chip-Karten-Kontaktier- bzw. Lesegerät gemäß einem der vorhergehenden Ansprüche, dadurch gekennzeichnet, daß die Kontaktträger (306) durch Federmittel (8) in seine Ausgangsposition vorgespannt ist.

21. Chip-Karten-Kontaktier- bzw. Lesegerät gemäß Anspruch 20, dadurch gekennzeichnet, daß die Federmittel (8) am einschuböffnungsseitigen Ende des Chip-Karten-Kontaktier- bzw. Lesegeräts angeordnet sind und eine Bügelfeder (8) aufweisen, deren Schenkel einerseits an benachbart zu den Rahmenteilen (52, 54) nach oben ragenden Vorsprüngen (66) anliegen, wobei die Bügelfeder (8) andererseits mittig an einer Verankerung (67) am Rahmen angebracht ist.

## Claims

1. A chipcard contacting and reading apparatus, respectively, comprising:
a stationary frame (5; 305) forming an opening (4);
a contacting apparatus (6; 606) adapted to contact a chipcard (2) and reciprocally mounted within said opening (4) between a start position and a reading position with the assistance of guide means (10);
one, preferably a plurality of frame guide paths (34, 35; 334, 335) formed at the inner sides of lateral frame portions (52, 54; 352, 354) of the frame (5; 305); and
one, preferably a plurality of contact support guide paths (31, 32; 331, 332) provided at the contact support (6; 306), which provide together, when the contact support (6; 306) is inserted into the frame (5; 305), a form locking or form positive guide for the movement of the contact support between the start position and the reading position,
characterised in that
oppositely located pairs of guide paths form said form locking guide, and that
each of said guide paths on the side of the contact support and on the side of the frame comprise at least three sections, i.e. planar but elevationally offset sections which are connected by an inclined ramp section.

2. The reading apparatus of claim 1, characterised in that guide means are provided adjacent to each of the four corners of the contact support (6; 306) said guide means comprising frame guide paths and contact support guide paths,
said third and fourth guide apparatus (313, 314) are provided and assigned to a lateral frame portion (354), and that the first and second guide apparatus are formed in a mirror-like manner with respect to said third and fourth guide apparatus.

3. Reading apparatus of claim 1 or 2, characterised in that the guide paths on the contact support are formed on guide elements (323, 324, 325, 326).

4. Reading apparatus of one or more of the preceding claims, characterised in that the guide elements project laterally away from the contact support (306) and have lengths, seen in the direction of movement, which are smaller or equal to the lengths of openings (823, 824, 825, 826) which are formed in the lateral frame portions and allow access to the guide paths on the frame).

5. Reading apparatus of one or more of the preceding claims, characterised in that lower and upper guide paths (331, 332) on the contact support are provided for each guide element (323 to 326) for corporation with lower and upper guide paths (334, 335) on the frame.

6. A chipcard contacting and reading apparatus, respectively, having a stationary frame (305), an opening formed by said frame, a contact support (306) for contacting a chipcard (2), guide means (331, 332, 334, 335) supporting said contact support (306) for reciprocal movement between a start position and a reading position, wherein at least one, preferably a plurality of frame guide paths (334, 335) are provided at the inner sides of lateral frame portions (352, 354) of the frame (305), and wherein guide elements (323, 324, 325, 326) are provided at the contact support (306), characterised in that oppositely located pairs of guide paths form a form positive or form locking guide, and that each guide element (323, 324, 325, 326) comprises at least one, preferably a plurality of contact support guide paths (331, 332) which commonly form a form positive or form locking guide for the movement of the contact support between the start position and the reading position when the contact support is inserted into the frame (305), and wherein each guide element (324, 325, 326) comprises a generally tab-like shape of substantially uniform thickness shape bent twice and in opposite directions.

7. Chipcard contacting and reading apparatus, respectively, according to claim 6, characterised in that the guide elements (323, 324, 325, 326) laterally project from said contact support (306) and comprise a lengths in the direction of movement which is smaller or equal to the length of openings (823, 824, 825, 826) which are formed in the lateral frame portions and open up the access to the frame side guide paths.

8. Chipcard contacting and reading apparatus, respectively, according to claim 6 or 7, characterised in that each of said guide paths (331, 332, 334, 335) comprises three sections, two planar and elevationally offset sections, which are connected by an inclined ramp section.

9. Chipcard contacting and reading apparatus, respectively, according to one of the preceding claims, characterised in that the adjacent inner ends of the frame side guide paths (334, 335) do not overlap, but have a small distance (A 5) in the direction of the insert push.

10. Chipcard contacting and reading apparatus, respectively, according to one of the preceding claims, characterised in that the guide means (331, 332, 334, 335) are completely arranged within the widths of the chipcard (2).

11. Chipcard contacting and reading apparatus, respectively, according to one of the preceding claims, characterised in that the contact support (306) comprises contact elements (20) designed as leave spring contacts.

12. Chipcard contacting and reading apparatus according to claim 11, characterised in that the contact elements (20) are held in the contact support (306) due to injection moulding.

13. Chipcard contacting and reading apparatus, respectively, according to claim 11 or 12, characterised in that the contact elements (20) are biased in their rest position.

14. Chipcard contacting and reading apparatus, respectively, according to one of the preceding claims, characterised in that an end position switch (21) is provided, which comprises contact elements (80, 81) in the form of leaf spring contacts.

15. Chipcard contacting and reading apparatus, according to claim 14, characterised in that the end position switch (21) is injection moulded on the contact support (306).

16. Chipcard contacting and reading apparatus, respectively, according to claims 14 or 15, characterised in that the end position switch (21) is actuated by a projection (83) of the frame (305) when the contact support (306) reaches the reading position.

17. Chipcard contacting and reading apparatus, respectively, according to one of the preceding claims, characterised in that a card break (170) is provided at the frame (305), the effect of which is increased by spring means (172).

18. Chipcard contacting and reading apparatus, respectively, according to claim 17, characterised in that the spring means (172) comprise a metal leaf spring which has two spring arms (173, 174) which embrace a spring arm (171) formed unitary at the frame (305) from above and from below, respectively.

19. Chipcard contacting and reading apparatus, respectively, according to one of the preceding claims, characterised in that the contact support (306) comprises at its bottom side (64) two members (65) which project into the path of insertion of the cipcard (2).

20. Chipcard contacting and reading apparatus, respectively, according to one of the preceding claims, characterised in that the contact support (306) is biased into its start position by spring means (8).

21. Chipcard contacting and reading apparatus, according to claim 20, characterised in that said spring means (8) is located at the insert opening end of the chipcard contacting and reading apparatus, respectively and comprises a two-arm spring (8), the arms of which are in abutment with upwardly extending projections (66) located adjacent to frame portions (52, 54), the other end of said two-arm spring (8) being mounted at an anchor (67) at the frame.

## Revendications

1. Dispositif de mise en contact ou de lecture de cartes à puce équipé d'un cadre fixe (5; 305), qui forme une ouverture (4), dans laquelle est disposé un support de contacts (6; 306) en vue de la mise en contact d'une carte à puce (2) entre une position initiale et une position de lecture et retour à la position initiale par utilisation de moyens de guidage (10), une, de préférence plusieurs pistes de guidage de cadre (34, 35; 334, 335) sont réalisées sur les côtés intérieures de parties de cadre latérales (52, 54; 352, 354) du cadre (5; 305), et
sur le support de contacts (6; 306) sont prévues une, de préférence plusieurs pistes de guidage de support de contacts (31, 32; 331, 332), qui forment conjointement dans le support de contacts (6; 306) introduit dans le cadre (5; 305) un guidage par conformation pour le déplacement du support de contacts entre une position initiale et une position de lecture,
caractérisé en ce que
des paires de pistes de guidage en vis-à-vis forment le guidage par conformation, et
en ce que chacune des pistes de guidage côté support de contacts et côté cadre présente trois tronçons, des tronçons plans, mais décalés en hauteur, qui sont réunis par un tronçon incliné.

2. Appareil de lecture selon la revendication 1, caractérisé en ce que
adjacent à chacun des quatre sommets du support de contacts (6; 306) est prévue un dispositif de guidage présentant une piste de guidage de cadre et une piste de guidage de support de contacts, en ce que les troisième et quatrième dispositifs de guidage (313, 314) sont réalisés associés à une partie de cadre latérale (314), et
en ce que les premier et second dispositifs de guidage sont réalisés à symétrie de miroir par rapport aux troisième et quatrième dispositifs de guidage.

3. Dispositif de lecture selon la revendication 1 ou 2, caractérisé en ce que les pistes de guidage côté support de contacts sont réalisées sur des éléments de guidage (323, 324, 325, 326).

4. Dispositif de lecture selon une ou plusieurs des revendications précédentes, caractérisé en ce que les éléments de guidage s'éloignent latéralement du support de contacts (306) et possèdent des longueurs vues dans la direction de déplacement, qui sont inférieures ou égales aux longueurs d'ouvertures (823, 824, 825, 826), qui sont réalisées dans les parties de cadre latérales et permettent un accès aux pistes de guidage côté cadre.

5. Dispositif de lecture selon une ou plusieurs des revendications précédentes, caractérisé en ce que des pistes de guidage côté support de contacts inférieures et supérieures (331, 332) sont prévues pour chaque élément de guidage (323 à 326), et coopèrent avec les pistes de guidage côté cadre inférieures et supérieures (334, 335).

6. Dispositif de mise en contact ou de lecture de cartes à puce équipé d'un cadre fixe (305), qui forme une ouverture, dans laquelle est disposé en va-et-vient un support de contacts (306) en vue de la mise en contact d'une carte à puce (2) avec utilisation de moyens de guidage (331, 332, 334, 335) entre une position initiale et une position de lecture,
au moins une, de préférence plusieurs pistes de guidage de cadre (334, 335) étant réalisées sur les côtés intérieurs de parties de cadre latérales (352, 354) du cadre (305), et
sur le support de contacts (306) étant prévus des éléments de guidage (323, 324, 325, 326),
caractérisé en ce que des paires de pistes de guidage en vis-à-vis forment le guidage par conformation et en ce que chaque élément de guidage (323, 324, 325, 326) présente au moins une, de préférence plusieurs pistes de guidage de support de contacts (331, 332), qui forment conjointement dans le support de contacts (306) introduit dans le cadre (305) un guidage par conformation pour le déplacement du support de contacts entre une position initiale et une position de lecture, chaque élément de guidage (323, 324, 325, 326) présentant une configuration légèrement coudée deux fois dans des directions opposées, en général sous forme de barrettes d'épaisseur uniforme dans l'ensemble.

7. Dispositif de mise en contact ou de lecture de cartes à puce selon la revendication 6, caractérisé en ce que les éléments de guidage (323, 324, 325, 326) s'éloignent latéralement du support de contacts (306) et présentent une longueur vue dans la direction de déplacement, qui est inférieure ou égale à la longueur d'ouvertures (823, 824, 825, 826) qui sont formées dans les parties de cadre latérales et permettent un accès aux pistes de guidage côté cadre.

8. Dispositif de mise en contacts ou de lecture de cartes à puce selon la revendication 6 ou 7, caractérisé en ce que chacune des pistes de guidage (331, 332, 334, 335) présentent trois tronçons, deux tronçons plans, décalés en hauteur, qui sont réunis par un tronçon incliné.

9. Dispositif de mise en contact ou de lecture de cartes à puce selon l'une des revendications précédentes, caractérisé en ce que des extrémités intérieures adjacentes des pistes de guidage côté cadre (334, 335) ne se recouvrent pas, mais présentent dans la direction d'introduction un faible écart (A5).

10. Dispositif de mise en contact ou de lecture de cartes à puce selon l'une des revendications précédentes, caractérisé en ce que des moyens de guidage (331, 332, 334, 335) sont disposés entièrement à l'intérieur de la largeur de la carte à puce (2).

11. Dispositif de mise en contact ou de lecture de cartes à puce selon l'une des revendications précédentes, caractérisé en ce que le support de contacts (306) présente des éléments de contact (20) réalisés sous la forme de contacts de ressort à lame.

12. Dispositif de mise en contact ou de lecture de cartes à puce selon la revendication 11, caractérisé en ce que les éléments de contacts (20) sont moulés par injection dans le support de contacts (306).

13. Dispositif de mise en contact ou de lecture de cartes à puce selon la revendication 11 ou 12, caractérisé en ce que les éléments de contacts (20) sont précontraints dans leur position de repos (76).

14. Dispositif de mise en contact ou de lecture de cartes à puce selon l'une des revendications précédentes, caractérisé en ce qu'un interrupteur fin de course (21) est prévu, qui présente des éléments de contacts (80, 81) réalisés sous la forme de contacts de ressort à lame.

15. Dispositif de mise en contact ou de lecture de cartes à puce selon la revendication 14, caractérisé en ce que l'interrupteur fin de course (21) est moulé par injection sur le support de contacts (306).

16. Dispositif de mise en contact ou de lecture de cartes à puce selon la revendication 14 ou 15, caractérisé en ce que l'interrupteur fin de course (21) est actionné lors de l'atteinte de la position de lecture du support de contacts (306) par une saillie (83) sur le cadre (305).

17. Dispositif de mise en contact ou de lecture de cartes à puce selon l'une des revendications précédentes, caractérisé en ce que, sur le cadre (305) est disposé un frein de carte (170), dont l'action est renforcée par des moyens élastiques (172).

18. Dispositif de mise en contact ou de lecture de cartes à puce selon la revendication 17, caractérisé en ce que les moyens élastiques (172) présentent un ressort à lame métallique, qui possède deux bras de ressort (173, 174), qui entourent depuis le haut ou depuis le bas un bras de ressort (171) réalisé d'une seule pièce avec le cadre (305).

19. Dispositif de mise en contact ou de lecture de cartes à puce selon l'une des revendications précédentes, caractérisé en ce que le support de contacts (306) porte sur son côté inférieur (74) deux doigts d'entraînement (76), qui pénètrent dans la piste d'introduction de la carte à puce (2).

20. Dispositif de mise en contact ou de lecture de cartes à puce selon l'une des revendications précédentes, caractérisé en ce que le support de contacts (306) est précontraint dans sa position initiale par des moyens élastiques (8).

21. Dispositif de mise en contact ou de lecture de cartes à puce selon la revendication 20, caractérisé en ce que les moyens élastiques (8) sont disposés à une extrémité côté ouverture d'introduction du dispositif de mise en contact ou de lecture de cartes à puce et présentent un ressort sous forme d'étrier (8), dont les branches sont d'une part adjacentes à des parties saillantes vers le haut (66) aux parties de cadre (52, 54), le ressort en étrier (8) étant disposé d'autre part au milieu sur un ancrage (76) du cadre.
